Europäisches Patentamt

European Patent Office

Office européen des brevets

(11) Veröffentlichungsnummer: **0 035 731**
**A2**

## (12) EUROPÄISCHE PATENTANMELDUNG

(21) Anmeldenummer: 81101493.5

(22) Anmeldetag: 02.03.81

(51) Int. Cl.³: **H 04 L 11/16**
H 04 Q 9/00, G 08 C 19/16
G 06 F 3/04, G 06 F 15/16

(30) Priorität: 11.03.80 DE 3009308

(43) Veröffentlichungstag der Anmeldung:
16.09.81 Patentblatt 81/37

(84) Benannte Vertragsstaaten:
AT BE CH FR GB LI NL

(71) Anmelder: SIEMENS AKTIENGESELLSCHAFT Berlin
und München
Postfach 22 02 61
D-8000 München 22(DE)

(72) Erfinder: Janetzky, Dittmar, Dipl.-Ing.
Liedolsheimer Ring 26
D-7500 Karlsruhe(DE)

(54) Verfahren und Anordnung zum Übertragen von Datensignalen.

(57) Die Ausgänge von Teilnehmerstationen (TS10, TS11 ...
TS3n), zwischen denen Daten übertragen werden sollen, bilden zusammen mit einer Busleitung (DL1, DL2 ... FDL, FTL)
Wired-OR-Verbindungen. Zur Einleitung einer Master-
Übertragung schalten die Teilnehmerstationen, welche die
Übernahme der Master-Funktion wünschen, Prioritätsnummern, beginnend mit dem Bit höchster Wertigkeit, bitweise
auf die Busleitung (DL1, DL2 ... FDL). Das entstehende Signal
wird von allen Teilnehmerstationen empfangen, wobei die
Stationen, deren auf die Busleitung geschalteter Teil der Prioritätsnummer kleiner ist als das auf der Busleitung entstandene Signal, sich von der weiteren Bewerbung um die
Master-funktion ausschließen. Die Master-Funktion erhält die
Teilnehmerstation, deren Prioritätsnummer mit der nach
Abschluß der Entscheidungssequenz auf der Busleitung entstehenden Signalkombination übereinstimmt.
Hauptanwendungsgebiet der Erfindung sind Datenverarbeitungssysteme.

./...

FIG 1

SIEMENS AKTIENGESELLSCHAFT   Unser Zeichen
Berlin und München ---   VPA 80 P 3512

**Verfahren und Anordnung zum Übertragen von Datensignalen**

Die Erfindung bezieht sich auf ein Verfahren und eine Anordnung zum Übertragen von Datensignalen zwischen Teilnehmerstationen, die parallel an eine Busleitung angeschlossen sind, denen jeweils eine Adresse zugeordnet ist und von denen diejenigen, welche eine Anforderung auf Beteiligung an einer Datenübertragung stellen, Anforderungssignale abgeben, aufgrund deren mindestens eine ein Anforderungssignal abgebende Teilnehmerstation an einer Datenübertragung beteiligt wird.

Aus der DE-AS 19 37 648 ist ein Fernwirkverfahren mit einer Zentralstation und mehreren Unterstationen bekannt, bei dem ausschließlich die Zentralstation die Datenübertragung steuert, indem sie die Unterstationen mit deren Adresse zur Abgabe von Informationen aufruft. Im Normalfalle wird im zyklischen Aufrufbetrieb gearbeitet, bei dem die einzelnen Unterstationen nacheinander in einer bestimmten Reihenfolge aufgerufen werden. Dieser zyklische Aufrufbetrieb wird unterbrochen, wenn Alarm oder andere wichtige Meldungen sofort nach ihrem Auftreten an die Zentralstation weitergegeben werden müssen. Es werden dann die einzelnen Unterstationen mit ihren Adressen in vorherbestimmter Reihenfolge nacheinander aufgerufen, bis ein besonderes Zeichen empfangen wird, daß die nachfolgende Information diejenige ist, die sofort nach ihrem Auftreten weitergegeben werden muß. Hierbei tritt das Problem auf, daß die Zentralstation alle Adressen nacheinander aufrufen muß, auch die Adressen von solchen Stationen, die keine Meldung abzugeben haben. In der Zentralstation muß ferner eine Liste der vorhandenen Unterstationen geführt werden.

Zin 4 Scl / 03.03.1980

In der DE-PS 26 31 052 ist ein Datenübertragungssystem beschrieben, das mehrere parallel an eine Busleitung angeschlossene Teilnehmerstationen aufweist, von denen jeweils eine (Master-Station) die Datenübertragung steuert, während die anderen (Slave-Stationen) nur Befehle der jeweiligen Master-Station ausführen. Die Master-Funktion wird zyklisch in vorgegebener Reihenfolge von einer Station auf die andere übertragen. Es ist nicht angegeben, in welcher Weise das bekannte Datenübertragungssystem auf Meldungen reagiert, die sofort nach ihrem Auftreten übertragen werden müssen.

Der vorliegenden Erfindung liegt die Aufgabe zugrunde, ein Verfahren und eine Anordnung zum Übertragen von Datensignalen zu schaffen, bei dem im Falle des Auftretens von Meldungen, die außerhalb eines normalen Zyklus übertragen werden sollen, Unterstationen in Abhängigkeit ihrer Priorität und der Priorität der zu übertragenden Nachricht an einer Datenübertragung beteiligt werden, wobei zum Erkennen der Unterstation, welche sich an der Datenübertragung beteiligen möchte, weniger Zeit als bei den bekannten Verfahren und Systemen benötigt wird.

Diese Aufgabe wird mit den im kennzeichnenden Teil des Anspruchs 1 angegebenen Maßnahmen gelöst. Eine Anordnung zur Durchführung des neuen Verfahrens ist in Anspruch 9 angegeben.

Wie üblich, können auch bei dem neuen Verfahren den Teilnehmerstationen Adressen zugeordnet werden. Sind die Prioritäten der Teilnehmerstationen unveränderlich, so können die Adressen als Prioritätsnummern dienen, wobei selbstverständlich die Adressen entsprechend der Prioritäten der Teilnehmerstationen vergeben werden müssen. Dieselbe Prioritätsnummer darf nicht gleichzeitig an zwei verschiedene Teilnehmerstationen vergeben werden, da sonst diese beiden Stationen gleichzeitig an einer Datenübertragung beteiligt würden. Die Prioritätsnummern können aber veränderlich sein, damit die Teilnehmerstationen je nach der zu übertragenden Nachricht früher oder später an einer Datenübertragung beteiligt werden. Eine zyklische Änderung der Prioritätsnummern bewirkt, daß jede Teilnehmerstation einmal die höchste Priorität bekommt und an einer Datenübertragung beteiligt wird.

Die Teilnehmerstationen schalten einander entsprechende Stellen der Prioritätsnummern gleichzeitig auf die Busleitung. Die Ausgänge der Sender der Teilnehmerstationen sind so an die Busleitung angeschlossen, daß auf der Busleitung ein Signal entsteht, das durch disjunktive Verknüpfung der von den Teilnehmerstationen aufgeschalteten Signale gebildet ist. Dies hat zur Folge, daß jeweils das Signal auf der Busleitung erscheint, das von den aufgeschalteten Signalen die höchste Wertigkeit besitzt. Im Falle einer binären Darstellung der Prioritätsnummern bedeutet dies, daß das Signal log. "1" die höhere Wertigkeit und log. "0" die niedere hat und daß, wenn eine Teilnehmerstation log. "1" und eine andere log. "0" auf die Busleitung schaltet, dort log. "1" entsteht. Bekanntlich können Disjunktion und Konjunktion von binären Signalen vertauscht werden, wenn auch die Wertigkeit der Signale vertauscht wird. Es führt z. B. zum selben Ergebnis, wenn die Station mit der höchsten Priorität die Nummer 111 ... und der mit der niedrigsten Priorität die Nummer 000 ... zugeordnet ist und die auf die Busleitung geschalteten Signale nach einer ODER-Funktion verknüpft werden oder wenn der Station mit der höchsten Priorität die Nummer 000 und der mit der niedrigsten Priorität die Nummer 111 ... zugeordnet ist und die auf die Busleitung geschalteten Signale nach einer UND-Funktion verknüpft werden. Prinzipiell unterscheiden sich die beiden Verknüpfungsarten nicht, es handelt sich nur um eine unterschiedliche Beschreibung desselben Sachverhaltes. Aus diesem Grunde genügt es, von einer disjunktiven Verknüpfung der Signale höherer Wertigkeit zu sprechen.

Im Falle, daß die Signale in den einzelnen Stellen der Prioritätsnummern mehrwertig sind, z. B. die Wertigkeiten 0 bis 9 haben, sei es in Form von zehn Spannungspegeln oder von vier binären Signalen, entsteht, wenn eine Teilnehmerstation ein Signal mit der Wertigkeit 3, eine andere ein Signal mit der Wertigkeit 5 und eine dritte ein Signal mit der Wertigkeit 7 auf die Busleitung schaltet, dort ein Signal mit der Wertigkeit 7. Diese Wertigkeit wird festgestellt, und im folgenden Verfahrensschritt werden nur noch die Stationen berücksichtigt, deren Prioritätsnummernsignal in der zuvor überprüften Stelle die festgestellte Wertigkeit, im Beispiel 7, haben. Dies kann dadurch geschehen, daß die Teilnehmer, deren Prioritätsnummernsignal in einer überprüften Stelle eine niedrigere Wertigkeit als das auf der Busleitung entstandene Signal hat, die Ausgabe ihrer Prioritätsnummern für die weiteren Verfahrensschritte sperren, oder dadurch, daß nur noch die Stationen zur Abgabe ihrer Prioritätsnummern aufgerufen werden, deren Prioritätsnummernsignale mit dem Signal auf der Busleitung übereinstimmen. Auf diese Weise wird der Kreis der Stationen, die eine Anforderung auf Beteiligung an einer Datenübertragung stellen, schrittweise nach ihren Prioritätsnummern eingeengt. Schließlich bleibt die Station mit der höchsten Prioritätsnummer übrig, diese wird an der Datenübertragung beteiligt.

Es ist nicht in jedem Fall erforderlich, daß der Vergleich der Wertigkeiten der Prioritätsnummernsignale und der Signale auf der Busleitung für alle Stellen durchgeführt wird. Häufig steht schon nach wenigen Prüfschritten fest, welches die Station ist, die die Prioritätsnummer mit der höchsten Wertigkeit aufgeschaltet hat. Das Verfahren kann dann abgebrochen und die Station mit der festgestellten höchsten Priorität an der Datenübertragung beteiligt werden.

Im allgemeinen wird man die Prioritätsnummern binär darstellen. Es wird dann nach jedem Aufschalten eines Bits der Prioritätsnummern geprüft, ob der Signalzustand auf der Busleitung log. "0" (niedere Wertigkeit) oder log. "1" (höhere Wertigkeit) ist. Nur die Stationen, die log. "1" aufgeschaltet haben, geben beim folgenden Prüfschritt noch ihre Prioritätsnummern auf die Busleitung. Die anderen Stationen haben eine niedrigere Priorität und scheiden daher für die weitere Prüfung aus. Schalten alle Stationen log. "0" auf die Busleitung, nehmen auch alle Stationen am weiteren Auswahlverfahren teil.

Die Station, welche die höchste Prioritätsnummer auf die Busleitung geschaltet hat, kann an der folgenden Datenübertragung in der Weise beteiligt werden, daß sie von einer Zentralstation aufgerufen wird, eine in ihr enthaltene Nachricht zur Zentralstation oder einer anderen Unterstation zu übertragen, oder daß sie, wenn sie Teilnehmerstation eines Systems ist, in dem eine von mehreren gleichartigen Unterstationen eine Master-Funktion ausübt, die Master-Funktion erhält. In solchen Systemen ist jede Station in der Lage, selbst festzustellen, ob die auf der Busleitung entstehende Signalkombination einen größeren Wert hat als die eigene Prioritätsnummer und, falls dies der Fall ist, sich aus den weiteren Prüfschritten auszuschalten. Sie kann ferner nach Abschluß des Prüfvorganges erkennen, ob die auf der Busleitung entstandene Signalkombination mit ihrer Prüfnummer übereinstimmt und, wenn dies der Fall ist, die Master-Funktion übernehmen. Aus Sicherheitsgründen kann man aber auch so verfahren, daß die Master-Station die beim Prüfvorgang ermittelte Station gesondert zur Übernahme der Master-Funktion auffordert.

In Systemen mit einer Zentralstation, die ausschließlich den Datenverkehr auf der Busleitung steuert  und deren Unterstationen nicht imstande sind, Vergleiche zwischen ihren Prioritätsnummern und der auf der Busleitung entstehenden Signalkombination durchzuführen, kann man so verfahren, daß die Zentralstation zunächst mit einem ersten Gruppenaufruf alle Teilnehmerstationen zum Aufschalten des höchstwertigen Bit ihrer Prioritätsnummern auf die Busleitung auffordert. Danach ruft sie mit einem zweiten Gruppenaufruf nur diejenigen Teilnehmerstationen auf, welche aufgrund des ersten Gruppenaufrufs für das auf der Busleitung entstandene Signal verantwortlich sind, d. h. im Falle einer ODER-Verknüpfung die Teilnehmerstationen, deren höchstwertiges Prioritätsnummernbit log. "1" ist, und fordert diese auf, das Prioritätsnummernbit mit der zweithöchsten Wertigkeit auf die Busleitung zu schalten. Dieses Verfahren wird schrittweise wiederholt, wobei die Zentralstation mit weiteren Gruppenaufrufen jeweils die Teilnehmerstationen aufruft, welche die aufgrund des jeweils vorhergehenden Gruppenaufrufs auf der Busleitung entstehenden Signale auf die Busleitung geschaltet hatten. Die aufgerufenen Stationen schalten das Prioritätsnummernbit mit der nächstniedrigen Wertigkeit auf die Busleitung. Schließlich beteiligt die Zentralstation an der Datenübertragung die Teilnehmerstation, deren Prioritätsnummer beim Aufschalten aller Prioritätsnummernbit auf der Busleitung entstanden war. Die Erfindung ist somit sowohl bei dezentralisierten Systemen, die mehrere gleichartige Teilnehmerstationen enthalten, von denen eine die Datenübertragung steuert, als auch bei Systemen mit einer einzigen Zentralstation anwendbar. Selbstverständlich können auch solche dezentralisierten Systeme nach dem neuen Verfahren betrieben werden, bei denen eine Teilnehmerstation zeitweise wie eine die Datenübertragung ausschließlich steuernde Zentralstation arbeitet. Eine solche Betriebsweise hat bei weit auseinanderliegenden Teilnehmerstationen den Vorteil, daß die Prioritätsnummernbit nur an einer einzigen Stelle, nämlich am Ort der Zentralstation, geprüft werden, die dann aufgrund der Prüfung eine Auswahl über die aufzurufende Teilnehmerstation trifft.

Da die Prioritätsnummern bitweise mit der auf der Busleitung entstehenden Signalkombination verglichen werden, eignet sich die Erfindung vor allem für solche Übertragungsverfahren, bei denen Daten seriell übertragen werden. Die Erfindung ist aber auch im Falle einer Parallelübertragung anwendbar, indem die Teilnehmerstationen die auf der Busleitung anstehende Signalkombination bitweise, beginnend mit dem höchstwertigen Bit, mit ihrer eigenen Prioritätsnummer synchron zueinander vergleichen und die Aufschaltung ihrer Prioritätsnummer auf die Busleitung zurücknehmen, wenn sie feststellen, daß ihre Prioritätsnummer kleiner als der Wert der auf der Busleitung anstehenden Signalkombination ist. Entsprechend kann vorgegangen werden, wenn eine die Datenübertragung steuernde Zentralstation vorhanden ist und die Unterstationen nicht imstande sind, selbständig ihre Prioritätsnummern mit den Signalen auf der Busleitung zu vergleichen und die Aufschaltung der Prioritätsnummern zurückzunehmen. In diesem Falle prüft die Zentralstation, beginnend mit dem höchstwertigen Bit, bitweise die empfangene Signalkombination und fordert nach jedem Prüfschritt nur noch die Stationen auf, ihre Prioritätsnummern aufzuschalten, deren Prioritätsnummern in den verglichenen Bitstellen mit der empfangenen Signalkombination übereinstimmen.

Eine bevorzugte Anordnung zur Durchführung des erfindungsgemäßen Verfahrens mit Teilnehmerstationen, die an eine Busleitung angeschlossen sind und die Sender und Empfänger zum Übertragen von Datensignalen enthalten, zeichnet sich dadurch aus, daß der Sender über einen Transistor mit offenem Kollektor an die Busleitung angeschlossen ist, daß die Teilnehmerstationen jeweils ein Prioritätsregister zur Aufnahme einer Prioritätsnummer sowie eine Einrichtung zur Übergabe des Prioritätsregisterinhaltes zum Sender aufweisen, daß die Teilnehmerstationen jeweils einen Vergleicher enthalten, dem einerseits der Inhalt des Prioritätsregisters und andererseits das vom Empfänger aufgenommene Signal bitweise zuführbar ist und der die zwischen das Prioritätsregister und den Sender geschaltete Übergabeeinrichtung sperrt, wenn der Wert des vom Empfänger gelieferten Signals größer ist als der des vom Prioritätsregister empfangenen Signals, und der ein Signal zur Vorbereitung für die Teilnahme an einer Datenübertragung liefert, wenn der Wert des vom Empfänger gelieferten Signals gleich dem Inhalt des Prioritätsregisters ist.

Anhand der Zeichnung werden im folgenden die Erfindung sowie weitere Ausgestaltungen näher beschrieben und erläutert.

Es zeigen
Figur 1 ein Blockschaltbild eines Ausführungsbeispiels der Erfindung,
die Figuren 2 und 3 Zeitdiagramme von Impulsen, die in dem System nach Figur 1 auftreten, und
die Figuren 4 und 5 veranschaulichen in dem Ausführungsbeispiel nach Figur 1 verwendete Codewörter.

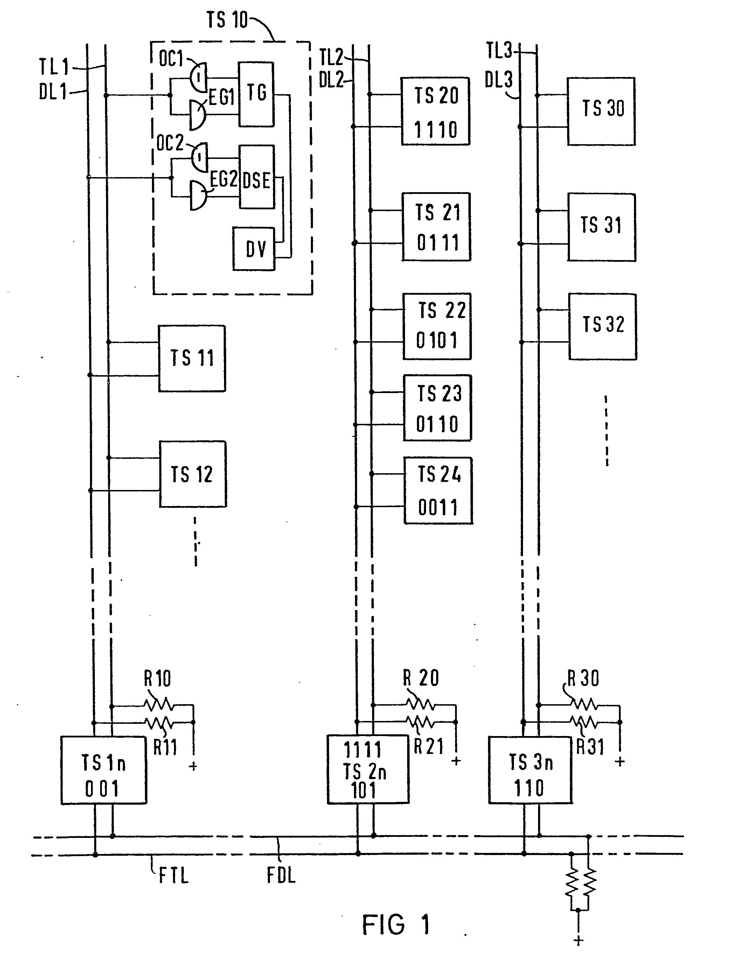

In Figur 1 sind mit TS10, TS11 ...; TS20, TS21 ...; TS30, TS31 ... Teilnehmerstationen eines Datenverarbeitungssystems, z. B. eines Fernwirksystems, bezeichnet. Zwischen ihnen sollen Daten übertragen werden. Räumlich nahe beieinanderliegende Teilnehmerstationen TS10, TS11, TS12 ... TS1n bzw. TS20 ... TS2n bzw. TS30 ... TS3n sind jeweils zu Gruppen zusammengefaßt, die jeweils an eine Datenbusleitung DL1, DL2, DL3 und an eine Taktbusleitung TL1, TL2, TL3 angeschlossen sind. Die Teilnehmerstationen TS1n, TS2n, TS3n verbinden die Busleitungen für den Nahbereich mit Fernbusleitungen FTL und FDL. Im Ausführungsbeispiel ist jeweils nur eine Datenleitung vorgesehen; die Daten werden daher bitweise seriell übertragen. Es ist aber auch möglich, zur Parallelübertragung mehrere Datenleitungen zu verwenden. Ferner können die Daten gemischt parallel und seriell übertragen werden, z. B. im Nahbereich parallel und über die Fernbusleitung seriell.

Die einzelnen Teilnehmerstationen, von denen jede die Steuerung der Datenübertragung (Master-Funktion) übernehmen kann, sind in gleicher Weise aufgebaut, so daß es genügt, Aufbau und Funktion der Station TS10 zu beschreiben. Sie enthält einen steuerbaren Taktgeber TG, der sein Ausgangssignal über ein Gatter OC1, das im Prinzip nichts anderes ist als ein Transistor mit offenem Kollektor, auf die Taktleitung TL1 gibt. Die auf dieser Leitung TL1 stehenden Signale gelangen über ein Eingabegatter EG1, das als Trennglied dient, auf den Steuereingang des Taktgebers TG. Da die Taktgeber TG aller Teilnehmerstationen ihr Signal über einen Transistor mit offenem Kollektor auf die über einen Widerstand R10 an "+"-Potential liegende Taktleitung TL1 geben, tritt auf dieser Leitung schon dann "L"-Signal auf, wenn nur ein Gatter OC1 "L"-Signal abgibt. Andererseits tritt auf der Leitung TL1 erst dann "H"-Signal auf, wenn alle Gatter OC1 "H"-Signal abgeben. Die Taktleitung TL1 bildet daher eine sogenannte "wired-or-Verbindung". Erst dann wird den Steuereingängen der Taktgeber TG über die Eingabegatter EG1 ein Synchronisationssignal zugeführt. Alle über die Taktbusleitung miteinander verbundenen Teilnehmerstationen arbeiten daher synchron.

Die auf den Taktleitungen erzeugten Signale dienen dazu, die Datenübertragung über die Datenleitungen DL1, DL2, DL3 zu synchronisieren. Die Teilnehmerstationen enthalten einen Datensender und -empfänger DSE. Auch die zu sendenden Daten werden über Gatter OC2 auf die Datenleitungen geschaltet, die über einen Widerstand R11, R21, R31 an positives Potential angeschlossen sind. Alle Signale auf den Datenleitungen werden über Eingabegatter EG2 den Datensendern und -empfängern DSE zugeführt. Datenverarbeitungseinheiten DV stellen die zu sendenden Daten bereit und nehmen die empfangenen Daten zur Weiterverarbeitung auf.

Die Gatter OC1, OC2 der Teilnehmerstationen bilden zusammen mit der an sie angeschlossenen Busleitung ein ODER-Glied, wenn man "H"-Signal als log. "O" und "L"-Signal als log. "1" definiert. Definiert man dagegen "H"-Signal als log. "1" und "L"-Signal als log. "O", so stellen die Gatter OC1, OC2 zusammen mit den Busleitungen UND-Glieder dar.

Die an die einzelnen Busleitungen für die Nahbereiche angeschlossenen Stationen können durch die Teilnehmerstationen TS1n, TS2n, TS3n, welche die Verbindung über die Fernbusleitung herstellen, entkoppelt sein, so daß die einzelnen Gruppen von Teilnehmerstationen unabhängig voneinander arbeiten. Sollen Daten von einer Station einer Gruppe, z. B. von der Station TS10, zu einer Station einer anderen Gruppe, z. B. der Station TS32, übertragen werden, so kann so vorgegangen werden, daß zunächst die Daten zur Station TS1n übertragen und dort zwischengespeichert werden, anschließend über die Fernbusleitung in die Station TS3n übernommen und von dort zur Station TS32 übertragen werden. Bei einem solchen Übertragungsverfahren können die einzelnen Gruppen von Teilnehmerstationen stets unabhängig voneinander arbeiten. Die Verbindungsstationen zur Fernbusleitung haben in einem solchen Falle zwei Adressen, eine für die Leitungen des Nahbereichs und eine für die Fernübertragungsleitung, z. B. hat die Station TS2n für den Nahbereich die Adresse 1111 und für den Fernbereich die Adresse 101. Eine andere Betriebsweise ist, alle Teilnehmerstationen zu synchronisieren, so daß die einzelnen Busleitungen für die Nahbereiche und die Fernbusleitung wie eine einzige Busleitung wirken. Schließlich ist es auch möglich, nur im Falle einer Fernübertragung von Daten die beteiligten Teilnehmerstationsgruppen und die Fernbusleitung zu synchronisieren.

In Datenverarbeitungssystemen der in Figur 1 gezeigten Art ist es häufig erforderlich, daß Teilnehmerstationen sich spontan melden können, z. B. im Falle eines Alarms die

0035731

Master-Funktion zu übernehmen oder sich in sonstiger Weise an der Datenübertragung zu beteiligen. Solche Meldungen können z. B. an bestimmten Stellen eines Wortes eingeblendet werden. Beispielsweise kann ein Wort eine Länge von 32 Bit haben, von denen die ersten vier Bit zum Eintragen von Meldungen vorgesehen sind. Ein Wortlängenzähler gibt dann während der ersten vier Bit das Aussenden von Daten in jedem Falle frei, unabhängig davon, ob die zugehörige Teilnehmerstation an einer laufenden Datenübertragung beteiligt ist oder nicht. Dadurch, daß als Ausgabegatter OC2 ein Transistor mit offenem Kollektor verwendet ist und die Datenleitungen über einen Widerstand an positives Potential geschaltet sind, wird im Falle einer solchen Meldung auf jeden Fall auf der Datenleitung "L"-Signal erzeugt. Den einzelnen Stationen ist jeweils eine Priorität zugeordnet, mit der sie Meldungen abgeben können, aufgrund der sie die Master-Funktion erhalten. Im Falle von 16 Stationen genügt eine Signalkombination von vier Bit, um jeder Station eine Priorität zuordnen zu können. Jede Station, welche die Master-Funktion übernehmen will, schaltet daher an der vorbestimmten Stelle eines Wortes die seine Priorität anzeigende Signalkombination (Prioritätszeiger) auf die Datenleitung. Auf dieser werden die Signale nach einer ODER-Funktion verknüpft, und es entsteht eine neue Signalkombination, welche von allen Teilnehmerstationen empfangen wird. Je nachdem, ob das Datenübertragungssystem mehrere unabhängig voneinander arbeitende Gruppen von Teilnehmerstationen enthält oder ob alle Teilnehmerstationen an eine einzige gemeinsame Busleitung angeschlossen sind, können diese Meldevorgänge in der Anordnung nach Figur 1 auf den Nahbereichs-Busleitungen gleichzeitig und unabhängig voneinander ablaufen, oder alle Teilnehmerstationen müssen gleichzeitig und synchron ihre Prioritätsnummer auf die Busleitung aufschalten, und es werden alle Prioritätsnummern miteinander nach einer ODER-Funktion verknüpft. Selbstverständlich können die Prioritätsnummern auch einen größeren Informationsgehalt als vier Bit haben, und es können auch zusätzliche Informationen wie Adressen, Art der zu übermittelnden Information usw. aufgeschaltet werden.

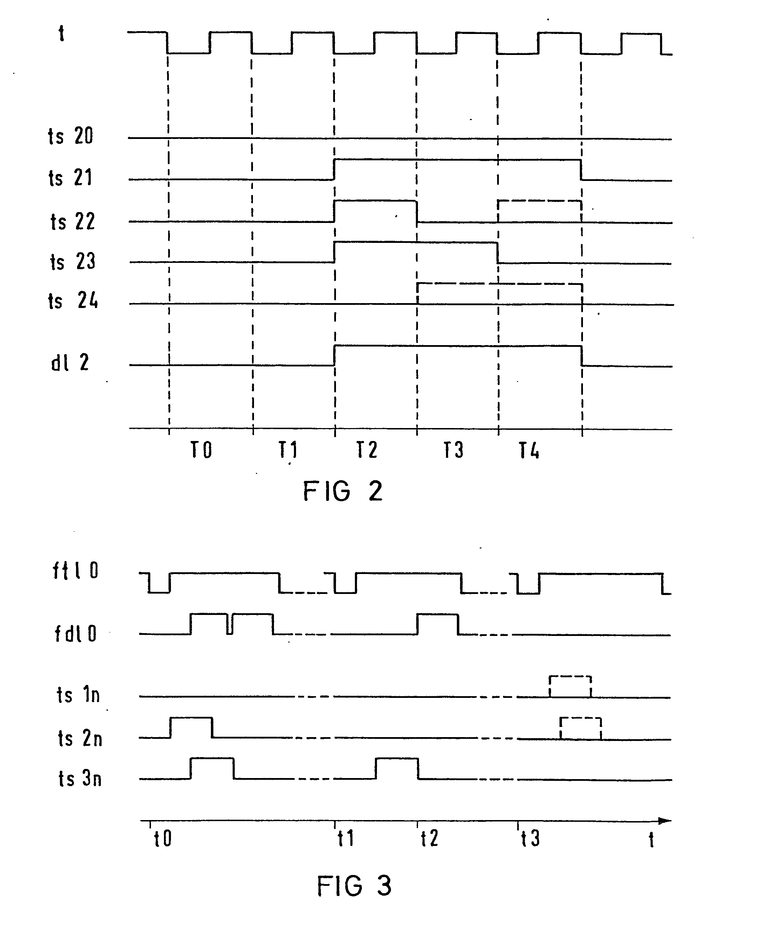

Im folgenden wird die Abgabe und das Erkennen von Meldungen, mit denen Teilnehmerstationen die Übernahme der Master-Funktion wünschen, an einem einfachen Beispiel beschrieben. Das System nach Figur 1 arbeite in der Weise, daß die einzelnen Nahbereichsbusleitungen unabhängig voneinander arbeiten. Es kann daher die an die Busleitungen DL2, TL2 angeschlossene Gruppe von Teilnehmerstationen gesondert betrachtet werden. Die den einzelnen Teilnehmerstationen zugeordneten Prioritäten sollen nicht geändert werden. Es können daher die Adressen der Teilnehmerstationen als Prioritätsnummer verwendet werden, wozu die Adressen entsprechend der Priorität der jeweiligen Station gewählt sind. Beispielsweise hat die Station TS20 die Prioritätsnummer und damit die Adresse 1110. Es sei angenommen, daß die Stationen TS21, TS22, TS23 und TS24 die Übernahme der Master-Funktion wünschen. Figur 2 zeigt die bei Angeben einer Meldung auftretenden Impulsdiagramme. Mit t ist das Diagramm des auf der Leitung TL1 auftretenden Taktsignals bezeichnet. Diagramme ts20, ts21 ... veranschaulichen die von den Teilnehmerstationen TS20, TS21 ... abgegebenen Binärsignale, und das Diagramm dl2 zeigt den Verlauf des auf die Datenbusleitung DL2 entstehenden Signals. Ein erster Zeitabschnitt T0 dient als Synchronisationsschritt, während dessen alle Teilnehmerstationen "0"-Signal abgeben. Während des folgenden Zeitabschnitts T1 sind die Teilnehmerstationen, welche die Master-Funktion übernehmen wollen, aufgefordert, das höchstwertige Bit ihrer Prioritätsnummer aufzuschalten. Dieses höchstwertige Bit der Stationen TS21, TS22, TS23 und TS24 ist Null. Die Station TS20 gibt kein Signal ab, da sie nicht die Master-Funktion zu übernehmen wünscht. Das Signal dl2 auf der Datenbusleitung bleibt daher Null.

Während des folgenden Zeitabschnitts T2 sind daher alle Stationen, soweit sie die Master-Funktion übernehmen wollen, aufgefordert, das Bit mit der zweithöchsten Wertigkeit auf die Datenleitung zu schalten. Demgemäß geben die Stationen TS21, TS22 und TS23 "1"-Signal ab, die Station TS24 weiterhin "O"-Signal. Das Signal dl2 auf der Datenleitung wird daher log. "1". Dieses Signal wird von allen Teilnehmerstationen empfangen und hat die Wirkung, daß die Teilnehmerstationen, die während des Abschnittes T2 "O"-Signal abgeben bzw. deren Prioritätsnummernbit mit der zweithöchsten Wertigkeit Null ist, im folgenden nicht mehr ihre Prioritätsnummer bzw. ihre Adresse auf die Datenleitung schalten. Im gewählten Beispiel ist dies die Station TS24. Im Zeitabschnitt T3, währenddessen die die Übernahme der Master-Funktion wünschenden Stationen das Prioritätsnummernbit mit der dritthöchsten Wertigkeit auf die Datenleitung geben, schalten daher nur die Teilnehmerstationen TS21 und TS23 "1"-Signal auf, da die Station TS24 ausgeschieden ist und das dritte Bit der Prioritätsnummer der Station TS22 "O" ist. Das Signal dl2 ist auch im Zeitabschnitt T3 log. "1", ist also höherwertig als das Ausgangssignal der Station TS22, so daß im folgenden auch diese Station ausscheidet. Im Zeitabschnitt T4 schalten die Stationen TS21 und TS23 ihr Prioritätsnummernbit mit der vierthöchsten, im Ausführungsbeispiel der niedrigsten Priorität auf die Datenleitung, wo das von der Station TS21 abgegebene "1"-Signal den Zustand log. "1" bewirkt. Das Signal auf der Datenleitung DL2 stimmt mit der von der Station TS21 abgegebenen Prioritätsnummer überein, woraus alle Stationen erkennen können, daß die Station TS21 die Master-Funktion erhält. Die Übertragung der Master-Funktion kann ohne Zeitverlust dadurch erfolgen, daß die Station TS21 aufgrund des Signales auf der Datenleitung die Master-Funktion übernimmt. Dies kann aber den Nachteil haben, daß im Falle einer Störung mehrere Stationen gleichzeitig die Master-Funktion übernehmen oder daß auf der Datenleitung ein Signal gebildet wird, das keine Station als Prioritätsnummer enthält, so daß keine Station die Master-Funktion übernimmt. Um eine solch erhebliche Störung zu vermeiden, kann die Master-Funktion auch in der Weise übertragen werden, daß die Station, welche bisher die Master-Funktion innehatte, die Station mit der auf der Datenleitung gebildeten Prioritätsnummer gesondert aufruft, die Masterfunktion zu übernehmen. Im Falle einer fehlerhaft gebildeten Prioritätsnummer könnte dies nur zur Folge haben, daß keine Station die Master-Funktion übernimmt, so daß die ursprüngliche Master-Station die Master-Funktion beibehält, oder daß die Master-Funktion auf eine Station übertragen wird, die sie aufgrund ihrer Priorität nicht erhalten sollte oder die keine Anforderung auf Übernahme der Masterfunktion gestellt hat. Eine solche Störung kann hingenommen werden, da sichergestellt ist, daß eine und nur eine Station die Master-Funktion hat und die Datenübertragung nicht unterbrochen ist. Bei der nächsten Aufschaltung der Prioritätsnummer kann der Fehler behoben werden.

In der bisherigen Beschreibung ist ein dezentralisiertes Datenübertragungssystem vorausgesetzt, bei dem jede Teilnehmerstation die Master-Funktion übernehmen kann und die dazu erforderlichen Einrichtungen enthält. Hiervon unterscheidet sich ein System mit einer zentralen Steuerung dadurch, daß nur diese Meldungen entgegennimmt und aufgrund dieser Meldungen die Teilnehmerstationen zur Abgabe oder Empfang von Informationen aufruft. Auf diese Weise können aus hier nicht interessierenden Gründen auch dezentralisierte Systeme arbeiten, wobei eine Teilnehmerstation die Funktion der zentralen Steuerung übernimmt. Im Ausführungsbeispiel sollen die Teilnehmerstationen TS1n, TS2n, TS3n als System mit einer Zentraleinheit arbeiten. Eine nicht dargestellte Teilnehmerstation TSOn soll die Funktion der zentralen Steuereinheit ausüben; jedoch könnte diese Funktion auch von einer der Stationen TS1n, TS2n, TS3n übernommen werden. Alle drei Stationen wünschen, an einer Datenübertragung beteiligt zu werden, sei es Daten zu senden, zu empfangen oder die Funktion einer zentralen Steuereinheit zu übernehmen. Zu diesem Zwecke schalten sie ähnlich wie beim zuvor beschriebenen Beispiel ihre Prioritätsnummer 001, 101, 110 auf die Ferndatenleitung FDL, jedoch wegen der zentralen Steuerung in modifizierter Form. In Figur 3 ist die Betriebsweise veranschaulicht. Ein Diagramm ft10 zeigt den Signalverlauf auf der Taktleitung FTL am Ort der Station TSOn. In einem Diagramm fd10 ist der Signalverlauf auf der Datenleitung FDL am Ort der Station STn0 dargestellt. Diagramme ts1n, ts2n und ts3n zeigen den Verlauf der von den Einheiten TS1n, TS2n, TS3n auf die Datenleitung geschalteten Signale. Es wird angenommen, daß die Station TS2n weiter von der Station TSOn als die Station TS1n entfernt ist und TS3n weiter als TS2n. Es ergeben sich daher unterschiedliche Signallaufzeiten zwischen den Teilnehmerstationen. Die Abfrage nach einem Wunsch zur Beteiligung an einer Datenübertragung wird mit einer Signalkombination gestartet, die in Figur 3 nicht dargestellt ist. Derartige Aufruftelegramme sind an sich bekannt. Der Inhalt des Telegramms unterscheidet sich vom bekannten jedoch dadurch, daß nicht einzelne Teilnehmerstationen zur Abgabe ihrer gesamten Adresse aufgerufen werden, sondern daß ein Gruppenaufruf zur Abgabe der beiden höchstwertigen Bit der Prioritätsnummern nur an diejenigen Teilnehmerstationen abgegeben wird, deren höchstwertiges Bit eine log. "1" ist. Zum gleichen Ergebnis führt es, wenn zunächst der Aufruf, das höchstwertige Bit der Prioritätsnummer abzugeben, an alle Teilnehmerstationen ergeht, die eine Beteiligung an einer Datenübertragung wünschen, und daß dann, falls eine log. "1" eingeht, die Teilnehmerstationen, deren höchstwertiges Prioritätsnummernbit eine log. "1" ist, zur Abgabe des Bits mit der zweithöchsten Wertigkeit aufgerufen werden. Im Beispiel nach Figur 3 wird zum Zeitpunkt t0 ein Taktimpuls abgegeben, der mit einer der Leitungslänge entsprechenden zeitlichen Verzögerung an den Stationen TS1n, TS2n, TS3n erscheint und dort die Abgabe des höchstwertigen Bit der Prioritätsnummer bewirkt. Die Stationen TS2n und TS3n schalten daraufhin "1"-Signale auf die Leitung FDL, welche mit einer weiteren Verzögerung als Signal fdl0 am Eingang der steuernden Leitung erscheinen.

Wegen der Laufzeitverzögerung erscheinen die Signale der Stationen TS2n und TS3n nicht gleichzeitig, sondern nacheinander. Der folgende Wechsel des Taktsignals ftl0 zeigt an, daß alle Meldungen über das höchstwertige Bit der Prioritätsnummern eingegangen sind. Die steuernde Station erkennt an dem Signal fdl0, daß mindestens eine Station, in deren Prioritätsnummer das höchstwertige Bit eine log. "1" ist, eine Beteiligung an einer Datenübertragung wünscht. In den folgenden Gruppenaufrufen spricht sie nur die Stationen an, bei denen diese Bedingung der Fall ist; die Station TS1n ist daher von den weiteren Aufrufen ausgeschlossen. Beim nächsten Gruppenaufruf fordert sie also die Stationen auf, deren höchstwertiges Prioritätsnummernbit eine log. "1" ist, ihr Prioritätsnummernbit mit der zweithöchsten Priorität zu senden. Als Antwort erhält sie von der Station TS3n zum Zeitpunkt t2 ein log. "1"-Signal, worauf sie zum Zeitpunkt t3 die Stationen mit Prioritätsnummern, deren beide höchstwertigen Bits log. "1" sind, zur Abgabe des Prioritätsnummernbit mit der dritthöchsten Wertigkeit, im Ausführungsbeispiel ist dies mit der niedrigsten Wertigkeit, aufruft. Da die einzige hiermit angesprochene Station TS3n eine Prioritätsnummer hat, deren drittes Bit log. "0" ist, erhält sie bis zum Zeitpunkt t4, in dem das Taktsignal ftl0 den Zustand wechselt, nur "0"-Signal, woraus sie erkennt, daß die Station mit der Prioritätsnummer 110 eine Anforderung zur Beteiligung an einer Datenübertragung stellt. Falls Stationsadresse und Prioritätsnummer übereinstimmen, was dann der Fall ist, wenn die Prioritäten der Stationen sich nicht ändern, kann die steuernde Station sofort die Station TS3n ansteuern, indem sie z. B. die Master-Funktion überträgt. Falls Prioritätsnummer und Adresse unterschiedlich sind, muß der steuernden Station die Zuordnung zwischen Prioritätsnummer und Adresse bekannt sein, entweder dadurch, daß sie eine Prioritätsliste führt, aus welcher die Zuordnung hervorgeht, oder daß die Station, die zur Abgabe des niederwertigsten Prioritätsnummernbit aufgerufen ist, im Anschluß an die Abgabe dieses Bit ihre Adresse sendet.

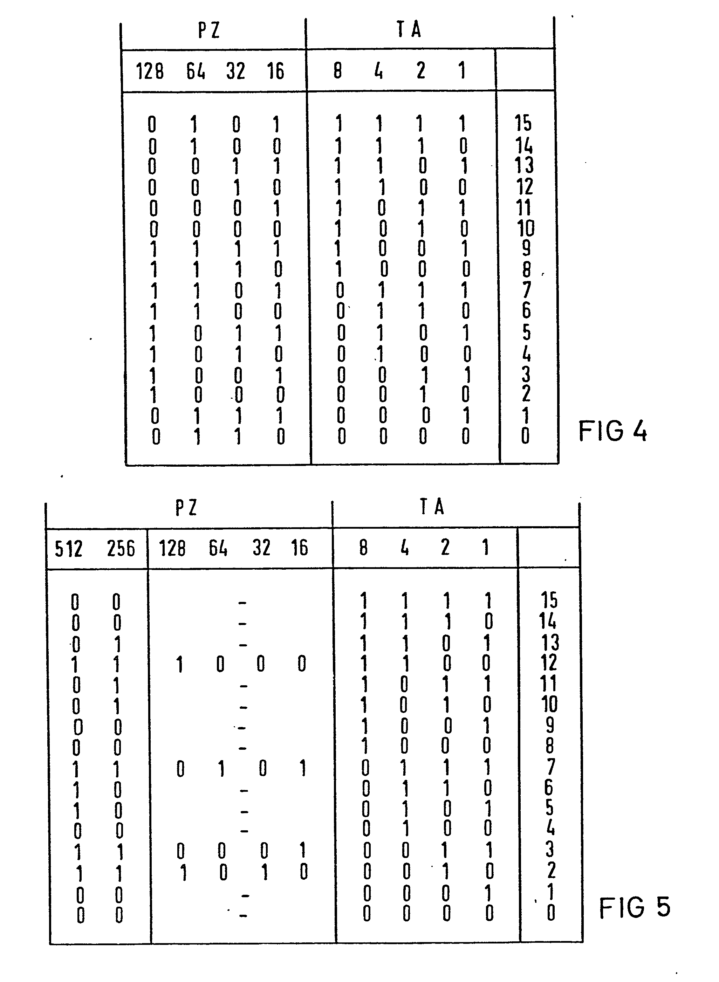

In Datenübertragungssystemen der beschriebenen Art ist häufig erwünscht, daß die Priorität der Teilnehmerstationen zyklisch verändert werden kann und damit ein Betrieb erreicht wird, der einem zyklischen Aufrufbetrieb entspricht. Eine derartig rotierende Prioritätszuweisung kann dadurch erreicht werden, daß die Prioritätsnummern zyklisch verändert werden, indem ihr Wert nach jeder Erfüllung einer Anforderung auf Beteiligung an einer Datenübertragung um Eins erniedrigt oder besser um Eins erhöht wird und die Station, deren Anforderung erfüllt ist, die niedrigste Priorität erhält. Besteht die Beteiligung an einer Datenübertragung in dem Erhalt der Master-Funktion, so hat die jeweilige Master-Station die niedrigste Priorität, die Station, die zuvor die Master-Funktion hatte, die zweitniedrigste und so fort. Die Prioritätsnummern können durch Differenzbildung zwischen den Stationsadressen und der Adresse der jeweiligen Master-Station gebildet werden, wobei, wenn die Adresse der Master-Station größer als die Adresse der Station ist, deren Prioritätsnummer errechnet werden soll, zu dieser Differenz eine Zahl hinzuaddiert wird, die um Eins größer als die Anzahl der möglichen Adressen ist. Es können auch Zähler verwendet werden, deren Stand nach jeder Übertragung der Master-Funktion um Eins erhöht und als Prioritätsnummer angegeben wird. Durch Setzen von Merkersignalen kann eine Auswahl der sich um die Master-Funktion bewerbenden Stationen getroffen werden. Anhand der Figur 4 soll dies näher erläutert werden. In der rechten Spalte sind dort die Stationsadressen in Dezimalzahlen angegeben. Im mittleren Feld sind die Stationsadressen in Dualzahlen und im linken Feld die zugehörigen Prioritätszeiger, ebenfalls in dualer Darstellung, aufgeführt. Über den Dualstellen ist in Dezimalzahlen die Wertigkeit angegeben. Die Kennwörter der einzelnen Stationen bestehen daher in diesem Beispiel aus
insgesamt acht Bit, deren vier höherwertigen die Prioritätsnummer PZ und deren vier niederwertigen die Adresse TA
bilden. In dem in Figur 4 festgehaltenen Zeitpunkt sendet
der Teilnehmer 10, der gerade die Master-Funktion hatte,
die Prioritätsnummer 0000 und der Teilnehmer Nummer 11
die Prioritätsnummer 11 - 10 = 0001. Die Station 9 sendet
die Prioritätsnummer 9 - 10 + 16 = 1111. Die Prioritätsnummern der anderen Stationen errechnen sich entsprechend.
Bei jeder Übertragung der Master-Funktion wird ein anderer
Teilnehmer die höchste Priorität einnehmen. Fehlen einige
Stationen, dann ist der Umlauf entsprechend verkürzt. Es
übernimmt dann ein Teilnehmer mit niederer Priorität die
Master-Funktion, da die höheren Prioritätsstufen nicht belegt sind. Dies ist ein Vorteil der Erfindung, der allgemein also auch für die oben beschriebenen Ausführungsbeispiele gilt; den einzelnen Stationen oder einer zentralen
Steuerung braucht die Anzahl der an die Busleitung angeschlossenen Stationen nicht bekannt zu sein. Die Adressen
von nicht vorhandenen Stationen werden bei den Entscheidungssequenzen übersprungen. Sollte im Fehlerfall oder
beim Zuschalten neuer Stationen die Prioritätsnummer nicht
korrekt gesetzt sein, dann entscheidet bei gleichwertiger
Prioritätsnummer die Adresse über die höhere Priorität.

Im praktischen Betrieb von Datenübertragungssystemen besteht häufig die Forderung, bestimmte Nachrichten innerhalb vorgegebener Verzugszeiten zu übertragen, d. h. den
Nachrichten eine bestimmte Priorität zuzuweisen. Damit
höherpriore Nachrichten bevorzugt übertragen werden können, muß der Station, die solche Nachrichten zu übertragen hat, eine von der Priorität der Nachricht abhängige
Priorität bei der Anforderung auf Beteiligung an der Datenübertragung bzw. auf Übernahme der Master-Funktion verliehen werden. Dies kann dadurch erreicht werden, daß die
Prioritätsnummern um Prioritätsgruppenbit höherer Priorität erweitert werden. In Figur 5 ist dies näher veranschaulicht. Es ist ersichtlich, daß die Prioritätsnummern
um 2 Bit mit den höchsten Wertigkeiten erweitert sind. Mit
diesen 2 Bit können vier Prioritätsgruppen eingerichtet
werden. Die Teilnehmerstationen enthalten daher jeweils
ein zehnstelliges Kennwort. Für die Entscheidung, welcher
Station die Master-Funktion übergeben werden soll, werden
zunächst in der oben beschriebenen Weise die beiden Prioritätsgruppenbit der Prioritätsnummer aufgeschaltet. Stationen, die in Gruppen niedrigerer Priorität eingeordnet
sind, scheiden dabei schon aus. Wenn das Bit mit der Wertigkeit 128 der Prioritätsnummer ausgesendet wird, nehmen nur noch Stationen ein und derselben Prioritätsgruppe
an einer Entscheidungssequenz teil. Das bedeutet, daß in
jeder Prioritätsgruppe eine rotierende Prioritätszuweisung erfolgen kann. Im Beispiel der Figur 5 sind dies die
Teilnehmerstationen mit den Adressen 12, 7, 3 und 2. In
Figur 5 sind von den Stationen, die einer niederwertigeren Prioritätsgruppe angehören, die niederwertigeren Stellen der Prioritätsnummern der Übersichtlichkeit halber
nicht eingetragen. Selbstverständlich kann, wenn innerhalb einer Prioritätsgruppe die Priorität nicht geändert
zu werden braucht, auf den vierstelligen, niederwertigeren Teil der Prioritätsnummer verzichtet werden.

9 Patentansprüche
5 Figuren

Patentansprüche

1. Verfahren zum Übertragen von Daten zwischen Teilnehmerstationen, die parallel an eine Busleitung angeschlossen sind, denen jeweils eine Adresse zugeordnet ist und von denen diejenigen, welche eine Anforderung auf Beteiligung an einer Datenübertragung stellen, Anforderungssignale abgeben, aufgrund deren mindestens eine ein Anforderungssignal abgebende Teilnehmerstation beteiligt wird, g e k e n n z e i c h n e t   d u r c h

a) in den Teilnehmerstationen (TS10, TS11 ... TS3n) sind unterschiedliche Signalkombinationen (Prioritätsnummern) enthalten, welche die Prioritäten angeben, mit denen die Teilnehmerstationen an einer Datenübertragung beteiligt werden;

b) nach einem auf die Busleitung von einer die Datenübertragung steuernden Station gegebenen Aufruf schalten die Teilnehmerstationen (TS10, TS11 ...) als Anforderungssignale ihre Prioritätsnummern gleichzeitig auf die Busleitung (DL1, DL2, DL3, FDL);

c) die Stellen gleicher Wertigkeit werden disjunktiv auf der Busleitung verknüpft;

d) die Wertigkeit der Signale in den einzelnen Stellen der durch die disjunktive Verknüpfung auf der Busleitung entstehenden Signalkombination wird, beginnend mit der höchstwertigen Stelle, festgestellt;

e) im jeweils folgenden Verfahrensschritt schalten nur die Stationen ihre Prioritätsnummern auf die Busleitung, deren Prioritätsnummernsignal in der beim vorhergehenden Verfahrensschritt überprüften Stelle dieselbe Wertigkeit wie die auf der Busleitung festgestellten haben;

f) an der folgenden Datenübertragung wird die Station beteiligt, deren Prioritätsnummer mit der nach Abschluß der Prüfung auf der Busleitung entstandenen Signalkombination übereinstimmt.

2. Verfahren nach Anspruch 1, d a d u r c h   g e - k e n n z e i c h n e t , daß im Falle einer binären Darstellung der Prioritätsnummern die Prioritätsnummernbit gleicher Wertigkeit nach einer ODER-Funktion auf der Busleitung (BL1, BL2 ...) verknüpft werden, daß die durch die ODER-Verknüpfung auf der Busleitung entstehende Signalkombination, beginnend mit dem höchstwertigen Bit, bitweise auf das Vorhandensein eines log. "1"-Signals überprüft wird und daß bei Feststellen eines log. "1"-Signals nur die Stationen, deren Prioritätsnummern in der überprüf- ten Stelle ein log. "1"-Signal aufweisen, ihre Prioritäts- nummern für die weitere Überprüfung auf das Vorhandensein von log. "1"-Signalen aufschalten.

3. Verfahren nach Anspruch 1 oder 2, d a d u r c h g e k e n n z e i c h n e t , daß die Teilnehmerstatio- nen (TS10, TS11 ...) ihre Adressen als Prioritätsnummern auf die Busleitung (DL1, DL2 ...) schalten.

4. Verfahren nach Anspruch 1 oder 2, d a d u r c h g e k e n n z e i c h n e t , daß die Werte der Prioritätsnummern zyklisch verändert werden.

5. Verfahren nach einem der Ansprüche 1 bis 4, d a - d u r c h   g e k e n n z e i c h n e t , daß von den Teilnehmerstationen (TS10, TS11 ...) jeweils eine (Master- Station) die Datenübertragung auf der Busleitung (DL1, TL1; DL2, TL2 ...) steuert und die anderen Stationen (Slave- Stationen) auf Befehle der Master-Station Daten senden und empfangen und daß die Master-Funktion auf eine beliebige Station übertragbar ist, daß die Master-Station die Slave-Stationen aufruft, die Prioritätsnummern auf die Busleitung zu schalten, daß jede Slave-Station ihre eigene Prioritätsnummer bitweise mit der auf der Busleitung entstehenden Signalkombination vergleicht und die Aufschaltung ihrer Prioritätsnummer auf die Busleitung sperrt, wenn im Falle einer ODER-Verknüpfung der auf die Busleitung geschalteten Signale die auf der Busleitung entstehende Signalkombination in der verglichenen Stelle "1"-Signal und die Prioritätsnummer "O"-Signal aufweist bzw. wenn im Falle einer UND-Verknüpfung der auf die Busleitung geschalteten Signale die auf der Busleitung entstehende Signalkombination in der verglichenen Stelle "O"-Signal und die Prioritätsnummer "1"-Signal aufweisen.

6. Verfahren nach Anspruch 5, d a d u r c h  g e - k e n n z e i c h n e t , daß die Master-Station an die Slave-Station, deren Prioritätsnummer mit der nach Abschluß der Überprüfung der auf der Busleitung entstehenden Signalkombination übereinstimmt, einen Befehl zur Übernahme der Master-Funktion abgibt.

7. Verfahren nach Anspruch 5, d a d u r c h  g e - k e n n z e i c h n e t , daß die Slave-Station, deren Prioritätsnummer mit der nach Abschluß der Überprüfung der auf der Busleitung entstehenden Signalkombination übereinstimmt, die Master-Funktion selbsttätig übernimmt.

8. Verfahren nach einem der Ansprüche 1 bis 4, d a - d u r c h  g e k e n n z e i c h n e t , daß eine Zentralstation (TSOn) mit einem ersten Gruppenaufruf alle Teilnehmerstationen (TS1n, TS2n, TS3n), in denen eine Anforderung zur Beteiligung an einer Datenübertragung vorliegt, zum Aufschalten des höchstwertigen Bits ihrer Prioritätsnummern auf die Busleitung auffordert, daß die Zentralstation mit einem zweiten Gruppenaufruf die Teilnehmerstationen (TS2n, TS3n), welche das aufgrund des ersten Gruppenaufrufs auf der Busleitung entstandene Signal auf die Busleitung geschaltet hatten, aufruft, das Prioritätsnummernbit mit der zweithöchsten Wertigkeit auf die Busleitung zu schalten, daß die Zentralstation mit weiteren Gruppenaufrufen die Teilnehmerstationen (TS3n), welche die aufgrund des jeweils vorhergehenden Gruppenaufrufs auf der Busleitung entstandenen Signale auf die Busleitung geschaltet hatten, aufruft, das Prioritätsnummernbit mit der nächstniedrigen Wertigkeit auf die Busleitung zu schalten und daß die Zentralstation (TSOn) an der Datenübertragung die Teilnehmerstation (TS3n) beteiligt, deren Prioritätsnummer beim Aufschalten aller Prioritätsnummernbit auf der Busleitung gebildet wurde.

9. Anordnung zur Durchführung der Verfahren nach den Ansprüchen 1 bis 8 mit Teilnehmerstationen, die an eine Busleitung angeschlossen sind und Sender sowie Empfänger zum Übertragen von Datensignalen enthalten, d a d u r c h g e k e n n z e i c h n e t , daß der Sender über einen Transistor (OC1, OC2) mit offenem Kollektor an die Busleitung (DL1, TL1; DL2, TL2) angeschlossen ist, daß die Teilnehmerstationen jeweils ein Prioritätsregister zur Aufnahme einer Prioritätsnummer sowie eine Einrichtung zur Übergabe des Prioritätsregisterinhaltes zum Sender aufweisen, daß die Teilnehmerstationen jeweils einen Vergleicher enthalten, dem einerseits der Inhalt des Prioritätsregisters und andererseits das vom Empfänger aufgenommene Signal bitweise zuführbar ist und der die zwischen das Prioritätsregister und den Sender geschaltete Übergabeeinrichtung sperrt, wenn der Wert des vom Empfänger gelieferten Signals größer ist als der des vom Prioritätsregister kommenden Signals, und der ein Signal zur Vorbereitung für die Teilnahme an einer Datenübertragung liefert, wenn der Wert des vom Empfänger gelieferten Signals gleich dem Inhalt des Prioritätsregisters ist.

FIG 1

FIG 2

FIG 3

0035731

| PZ | | | | TA | | | | |
|---|---|---|---|---|---|---|---|---|
| 128 | 64 | 32 | 16 | 8 | 4 | 2 | 1 | |
| 0 | 1 | 0 | 1 | 1 | 1 | 1 | 1 | 15 |
| 0 | 1 | 0 | 0 | 1 | 1 | 1 | 0 | 14 |
| 0 | 0 | 1 | 1 | 1 | 1 | 0 | 1 | 13 |
| 0 | 0 | 1 | 0 | 1 | 1 | 0 | 0 | 12 |
| 0 | 0 | 0 | 1 | 1 | 0 | 1 | 1 | 11 |
| 0 | 0 | 0 | 0 | 1 | 0 | 1 | 0 | 10 |
| 1 | 1 | 1 | 1 | 1 | 0 | 0 | 1 | 9 |
| 1 | 1 | 1 | 0 | 1 | 0 | 0 | 0 | 8 |
| 1 | 1 | 0 | 0 | 0 | 1 | 1 | 1 | 7 |
| 1 | 1 | 0 | 0 | 0 | 1 | 1 | 0 | 6 |
| 1 | 0 | 1 | 1 | 0 | 1 | 0 | 1 | 5 |
| 1 | 0 | 1 | 0 | 0 | 1 | 0 | 0 | 4 |
| 1 | 0 | 0 | 1 | 0 | 0 | 1 | 1 | 3 |
| 1 | 0 | 0 | 0 | 0 | 0 | 1 | 0 | 2 |
| 0 | 1 | 1 | 1 | 0 | 0 | 0 | 1 | 1 |
| 0 | 1 | 1 | 0 | 0 | 0 | 0 | 0 | 0 |

FIG 4

| PZ | | | | | | TA | | | | |
|---|---|---|---|---|---|---|---|---|---|---|
| 512 | 256 | 128 | 64 | 32 | 16 | 8 | 4 | 2 | 1 | |
| 0 | 0 | | | – | | 1 | 1 | 1 | 1 | 15 |
| 0 | 0 | | | – | | 1 | 1 | 1 | 0 | 14 |
| 0 | 1 | | | – | | 1 | 1 | 0 | 1 | 13 |
| 1 | 1 | 1 | 0 | 0 | 0 | 1 | 1 | 0 | 0 | 12 |
| 0 | 1 | | | – | | 1 | 0 | 1 | 1 | 11 |
| 0 | 1 | | | – | | 1 | 0 | 1 | 0 | 10 |
| 0 | 0 | | | – | | 1 | 0 | 0 | 1 | 9 |
| 0 | 0 | | | – | | 1 | 0 | 0 | 0 | 8 |
| 1 | 0 | 0 | 1 | 0 | 1 | 0 | 1 | 1 | 1 | 7 |
| 1 | 0 | | | – | | 0 | 1 | 1 | 0 | 6 |
| 1 | 0 | | | – | | 0 | 1 | 0 | 1 | 5 |
| 0 | 0 | | | – | | 0 | 1 | 0 | 0 | 4 |
| 1 | 1 | 0 | 0 | 0 | 1 | 0 | 0 | 1 | 1 | 3 |
| 1 | 1 | 1 | 0 | 1 | 0 | 0 | 0 | 1 | 0 | 2 |
| 0 | 0 | | | – | | 0 | 0 | 0 | 1 | 1 |
| 0 | 0 | | | – | | 0 | 0 | 0 | 0 | 0 |

FIG 5